# EUROPÄISCHE PATENTSCHRIFT

(11) **EP 1 573 239 B1**
(45) Veröffentlichungstag und Bekanntmachung des Hinweises auf die Patenterteilung: **16.09.2009**
(21) Anmeldenummer: 03788798.1
(22) Anmeldetag: 21.11.2003
(51) Int. Cl.: F16J 15/44, F01D 11/12

(54) **WABENDICHTUNG**
HONEYCOMB SEAL
GARNITURE D' TANCH IT EN NID D'ABEILLES

(30) Priorität: 20.12.2002 DE 10259963
(43) Veröffentlichungstag der Anmeldung: 14.09.2005
(73) Patentinhaber: MTU Aero Engines GmbH, 80995 München (DE)
(72) Erfinder: MEIER, Reinhold, 84405 Dorfen (DE)
(86) Internationale Anmeldenummer: PCT/DE2003/003856
(87) Internationale Veröffentlichungsnummer: WO 2004/061340

(56) Entgegenhaltungen:
- EP-A- 0 293 122
- EP-A- 1 001 140

## Beschreibung

Die Erfindung betrifft eine Wabendichtung gemäß dem Oberbegriff des Patentanspruchs 1.

Die hier vorliegende Erfindung bezieht sich auf eine Wabendichtung, die als Abdichtung zwischen einem feststehenden Bauteil und einem bewegten Bauteil, insbesondere zwischen einem Rotor und einem Stator einer Gasturbine, zum Einsatz kommt.

Gasturbinen, die zum Beispiel in Flugzeugen als Triebwerke verwendet werden, umfassen in der Regel mehrere feststehende Leitschaufeln sowie mehrere rotierende Laufschaufeln. Die Leitschaufeln und die Laufschaufeln sind von einem feststehenden Gehäuse umgeben. Die rotierenden Laufschaufeln rotieren relativ zum feststehenden Gehäuse, wobei zwischen Schaufelspitzen der rotierenden Laufschaufeln und dem Gehäuse ein radialer Spalt ausgebildet ist. Einen vergleichbaren Spalt gibt es auch zwischen den radial inneren Enden der Leitschaufeln und den die Laufschaufeln tragenden Rotor. Zur Optimierung des Wirkungsgrads der Gasturbine soll dieser radiale Spalt möglichst gering ausfallen. Daraus folgt, dass der radiale Spalt zwar einerseits erforderlich ist, um die Drehbarkeit der Laufschaufeln gegenüber dem Gehäuse zu gewährleisten, dass andererseits aber der radiale Spalt aus Wirkungsgradgründen von Nachteil ist.

Bei Gasturbinen kommen daher Wabendichtungen zum Einsatz, die einerseits den radialen Spalt zwischen den rotierenden Laufschaufeln und dem feststehenden Gehäuse abdichten, und die andererseits eine Drehbarkeit der Laufschaufeln gegenüber dem Gehäuse ermöglichen, ohne dass die Schaufelspitzen der Laufschaufeln bei der Rotation beschädigt werden. In gleicher Weise werden diese im Spalt zwischen Leitschaufeln und Rotor eingesetzt. Laufschaufeln können direkt mit ihren Schaufelspitzen oder mit sog. Dichtfins auf ihren Schaufeldeckbändern gegen solche Wabendichtungen laufen.

Wabendichtungen nach dem Stand der Technik bestehen aus einem Grundkörper und Wabenelementen, wobei die Wabenelemente und der Grundkörper getrennte Bauteile sind, die durch Hochtemperaturlöten im Vakuum miteinander verbunden werden. Die Wabenelemente werden auf Maß geschliffen und anschließend entgratet. Die Form und Größe der Wabenelemente ist meist gleich. Die Gestaltungsfreiheit, der Wabendichtung ist beschränkt.

Eine solche Wabendichtung ist beispielsweise in dem Dokument EP-A- 1 001 140 offenbart. Die Besonderheit hier liegt darin, dass der Grundkörper in seiner radialen Dicke mehrfach gestuft ist, um im Falle eines Schaufelbruchs die freiwerdende, zerstörerische Energie optimal aufzunehmen und zu verteilen.

Das Dokument EP-A- 0 293 122 betrifft harte, poröse, metallische Körper mit einer Honigwabenstruktur, welche durch pulvermetallurgisches Spritzgießen (Extrudieren) hergestellt werden. Diese werden als poröse Filterkörper für Flüssigkeiten und Gase in stark oxidierender Atmosphäre bei hohen Temperaturen eingesetzt. Beispielsweise werden diese Filterkörper zur Reinigung/Aufbereitung der Abgase von Verbrennungsmotoren verwendet. Die fluiddurchlässigen Körper sollen hart und mechanisch stabil sein. Es gibt keine Hinweise auf eine dichtende Funktion bzw. auf mögliche Reibkontakte mit bewegten Festkörpern. Somit ist dieses Dokument gegenüber dem Anmeldungsgegenstand (Wabendichtung) als gattungsfremd zu betrachten.

Hiervon ausgehend liegt der vorliegenden Erfindung das Problem zu Grunde, eine neuartige Wabendichtung zu schaffen, bei der eine größere Gestaltungsfreiheit möglich ist, und die fertigungstechnisch einfacher herzustellen ist.

Dieses Problem wird dadurch gelöst, dass die Eingangs genannte Wabendichtung durch die Merkmale des kennzeichnenden Teils des Patentanspruchs 1 weitergebildet ist.

Erfindungsgemäß ist die Wabendichtung durch pulvermetallurgisches Spritzgießen hergestellt. Das pulvermetallurgische Spritzgießen wird auch als Metal Injection Molding (MIM) bezeichnet. Durch die hier vorliegende Erfindung wird erstmals vorgeschlagen, eine Wabendichtung durch pulvermetallurgisches Spritzgießen herzustellen. Hierdurch ergibt sich eine größere Gestaltungsfreiheit für die Wabendichtung. Weiterhin sind die Fertigungskosten geringer. Das Schleifen und Entgraten als Bearbeitungsschritte entfallen Weiterhin ergibt sich eine Gewichtsreduzierung für die erfindungsgemäße Wabendichtung.

Nach einem anderen Aspekt der hier vorliegenden Erfindung verfügt die Wabendichtung über ein Bodenelement und einstückig mit dem Bodeneloment ausgebildete Wabenelemente. Dabei ist die Wabendichtung aus mehreren Segmenten mit Wabenelementen zusammengesetzt, wobei jedes Segment über ein Bodenelement und einstückig mit dem Bodenelement ausgebildete Wabenelemente verfügt. Hierdurch ist es möglich, die Wabendichtung abschnittsweise mit unterschiedlichen Eigenschaften - zum Beispiel mit unterschiedlichen Geometrien oder Materialeigenschaften - zu versehen, um so die Wabendichtung abschnittsweise oder segmentweise an die erwünschten Eigenschaften anzupassen.

Die Wabenelemente und die Bodenelemente können aus unterschiedlichen Werkstoffen bestehen, wobei die Wabenelemente z.B. gut abreibbar sein sollen und die Bodenelemente eine hohe Temperaturfestigkeit aufweisen sollen.

Bevorzugte Weiterbildungen der Erfindung ergeben sich aus den abhängigen Unteransprüchen und der nachfolgenden Beschreibung.

Ausführungsbeispiele der Erfindung werden, ohne hierauf beschränkt zu sein, an Hand der Zeichnung näher erläutert. In der Zeichnung zeigt:
- Fig. 1:: eine erfindungsgemäße Wabendichtung nach einem ersten Ausführungsbeispiel der Erfindung in schematisierter, perspektivischer Seitenansicht, nach
- Fig. 2:: eine erfindungsgemäße Wabendichtung einem zweiten Ausführungsbeispiel der Erfindung in schematisierter, perspektivischer Seitenansicht, und
- Fig. 3:: eine erfindungsgemäße Wabendichtung nach einem dritten Ausführungsbeispiel der Erfindung in schematisierter, perspektivischer Seitenansicht.

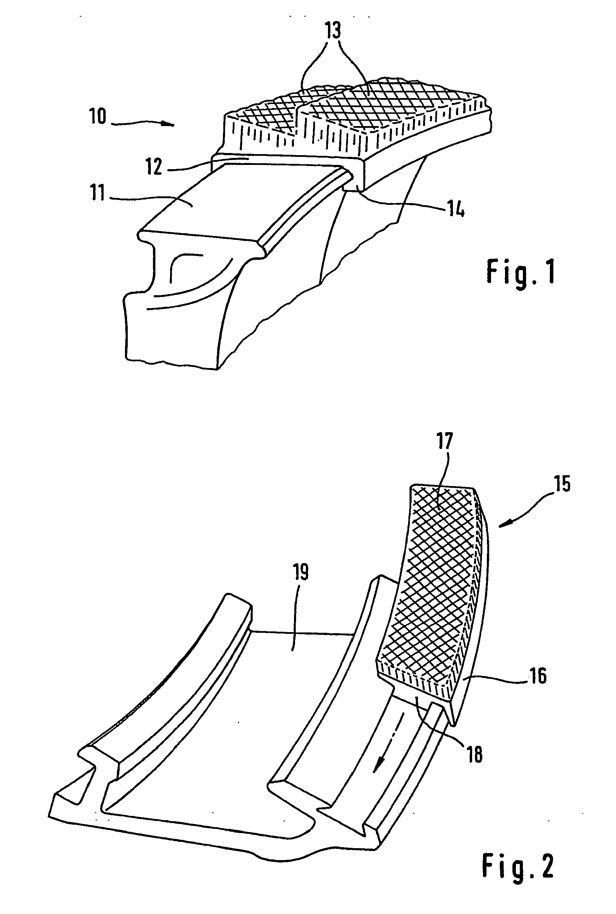

Die Figuren 1 bis 3 zeigen erfindungsgemäße Wabendichtungen in unterschiedlichen Ausführungsformen. Die dort gezeigten Wabendichtungen dienen vorzugsweise der Abdichtung eines Spalts zwischen rotierenden Laufschaufeln und einem feststehenden Gehäuse einer Gasturbine. Alternativ dienen die Wabendichtungen der Abdichtung zwischen Leitschaufeln und Rotor einer Gasturbine. So übernehmen derartige Wabendichtungen bei Gasturbinen, die zum Beispiel als Flugtriebwerke verwendet werden, unter anderem die Aufgabe der Abdichtung eines radialen Spalts zwischen Schaufelspitzen bzw. Dichtfins auf Deckbändern der rotierenden Laufschaufeln und dem feststehenden Gehäuse. Zur Erzielung eines optimierten Wirkungsgrads der Gasturbine soll der Spalt zwischen den Schaufelspitzen bzw. Dichtfins auf Deckbändern der Laufschaufeln und dem Gehäuse Möglichst gering ausgebildet sein. Damit die Schaufelspitzen der Laufschaufeln bei der Rotation derselben jedoch nicht beschädigt werden, muss die Wabendichtung nicht nur den radialen Spalt abdichten, sondern auch die Schaufelspitzen bzw. Dichtfins vor Beschädigungen schützen.

Fig. 1 zeigt eine Wabendichtung 10 nach einem ersten Ausführungsbeispiel der Erfindung. Die dort gezeigte Wabendichtung 10 ist auf ein Tragelement 11 aufgeschoben. Die Wabendichtung 10 verfügt über ein Bodenelement 12, wobei das Bodenelement 12 Wabenelemente 13 trägt. Das Bodenelement 12 und die Wabenelemente 13 sind einstückig ausgebildet. Erfindungsgemäß ist die Wabendichtung 10 durch pulvermetallurgisches Spitzgießen hergestellt. Pulvermetallurgisches Spritzgießen wird auch als Metal Injection Molding bezeichnet. Details dieses Fertigungsverfahrens sind aus der einschlägigen Literatur bekannt.

An dieser Stelle soll bezüglich des pulvermetallurgischen Spritzgießens angemerkt werden, dass sich mithilfe dieses Herstellungsprozesses hergestellte Produkte durch geometrische Gestaltungsfreiheit auszeichnen. Bei dem pulvermetallurgischen Spritzgießen wird ein Metallpulver mit einem Bindemittel zu einer homogenen Masse vermischt. Der Volumenanteil des Metallpulvers beträgt dabei vorzugsweise mehr als 50%. Diese homogene Masse aus Bindemittel und Metallpulver wird durch Spritzgießen verarbeitet. Hierbei werden Formkörper gefertigt. Bei der hier vorliegenden Erfindung entsprechen die Formkörper der erfindungsgemäßen Wabendichtung. Diese Formkörper weisen schon alle typischen Merkmale der gewünschten Wabendichtung auf. Sie verfügen jedoch über ein um den Bindemittelgehalt vergrößertes Volumen. Darauffolgend werden die Formteile einem Entbindungsprozess unterzogen. Abhängig vom eingesetzten Bindemittel wird dieses entweder thermisch zersetzt, verdampft oder durch ein Lösungsmittel extrahiert. Die zurückbleibenden, porösen Formkörper werden dann durch Sintern unter verschiedenen Schutzgasen oder unter Vakuum zu den Bauteilen mit den endgültigen, geometrischen Eigenschaften verdichtet. Im Anschluss liegt das fertige Bauteil vor.

Es liegt demnach im Sinne der hier vorliegenden Erfindung, die Wabendichtung 10, die aus einem Bodenelement 12 und aus einstückig mit dem Bodenelement 12 verbundenen Wabenelementen 13 besteht, durch pulvermetallurgisches Spritzgießen herzustellen.

Das Bodenelement 12 der Wabendichtung 10 der Fig. 1 verfügt über seitliche Führungsabschnitte 14, über welche die Wabendichtung 10 auf das Tragelement 11 aufgeschoben werden kann. Die Kontur der Führungselemente 14 ist demnach an die Kontur des Tragelements 11 angepasst, auf welche die Wabendichtung 10 aufgeschoben werden soll.

Fig. 2 zeigt eine zweite erfindungsgemäße Wabendichtung 15 im Sinne der Erfindung. Auch die Wabendichtung 15 der Fig. 2 verfügt über ein Bodenelement 16 und einstückig mit dem Bodenelement 16 verbundene Wabenelemente 17. Im Bereich des Bodenelements 16 ist wiederum ein Führungselement 18 vorhanden, über welches die Wabendichtung 15 in ein Tragelement 19 eingeschoben werden kann. Auch die Wabendichtung 15 des Ausführungsbeispiels der Fig. 2 ist durch pulvermetallurgisches Spritzgießen hergestellt.

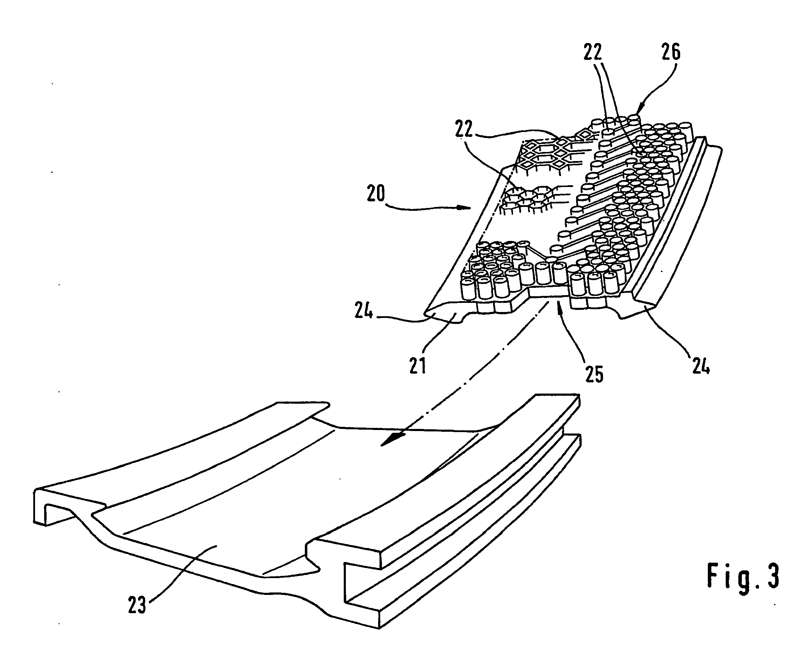

Bereits an dieser Stelle soll darauf hingewiesen werden, dass die Wabendichtungen 10 bzw. 15 der Ausführungsbeispiele gemäß Fig. 1 und 2 vorzugsweise aus mehreren Segmenten zusammengesetzt sind. So können mehrere Segmente im Sinne der Ausführungsbeispiele der Fig. 1 und 2 auf das entsprechende Tragelement aufgeschoben werden. Alle Segmente verfügen dann wiederum über ein Bodenelement 12 bzw. 16 und über einstückig mit dem Bodenelement ausgebildete Wabenelemente 13 bzw. 17. Wie Fig. 3 zeigt, weisen die Segmente zur Umfangsabdichtung Schlitze 30 und am gegenüberliegenden Segmentende nicht dargestellte Zungen auf, die in die Schlitze 30 der jeweils benachbarten Segmente eingreifen. Die Schlitze 30 und die Zungen werden während des MIM-Prozesses als integrale Elemente gefertigt.

Fig. 3 zeigt ein weiteres Ausführungsbeispiel einer erfindungsgemäßen Wabendichtung 20. Auch die dort gezeigte Wabendichtung 20 verfügt über ein Bodenelement 21 sowie einstückig mit dem Bodenelement 21 ausgebildete Wabenelemente 22. Fig. 3 kann entnommen werden, dass die Wabenelemente 22 über unterschiedliche geometrische Formen verfügen, wodurch insbesondere in Axialrichtung unterschiedliche Bereiche möglich sind.

Ränder des Bodenelements 21 dienen als Führungselemente, um die Wabendichtung 20 in ein Tragelement 23 einzuschieben. Im gezeigten Ausführungsbeispiel der Fig. 3 bilden die Randbereiche des Bodenelements 21 demnach keilförmige Führungselemente 24, die in entsprechende Ausnehmungen im Tragteil 23 eingreifen bzw. in dieselben eingeschoben werden.

Auch die Wabendichtung 20 des Ausführungsbeispiels der Fig. 3 ist vorzugsweise aus mehreren Segmenten zusammengesetzt. Wie Fig. 3 weiterhin zeigt, verfügt das in Fig. 3 gezeigte Segment der Wabendichtung 20 an einem Ende über eine Ausnehmung 25 und an einem gegenüberliegenden Ende über einen Vorsprung 26. Werden mehrere Segmente im Sinne der Fig. 3 in dem Tragelement 23 positioniert, so werden die Segmente miteinander verzahnt zur Vermeidung axialer Relativverschiebungen. Hierbei greift dann ein Vorsprung 26 eines Segments der Wabendichtung 20 in eine korrespondierende Ausnehmung 25 eines benachbarten Segments ein. Auch die Segmente der Wabendichtung des Ausführungsbeispiels der Fig. 3 sind durch pulvermetallurgisches Spritzgießen hergestellt.

Die erfindungsgemäßen Wabendichtungen 10, 15 und 20 der Ausführungsbeispiele gemäß Fig. 1 bis 3 verfügen über eine große Gestaltungsfreiheit. So sind mithilfe des pulvermetallurgischen Spritzgießens Wabendichtungen herstellbar, deren Wabenelemente hinsichtlich ihrer geometrischen Ausgestaltung individuell angepasst werden können. Durch den Einsatz des pulvermetallurgischen Spritzgießens für die Herstellung der erfindungsgemäßen Wabendichtung wird der Fertigungsaufwand reduziert. Das nach dem Stand der Technik erforderliche Schleifen sowie Entgraten der Wabendichtung entfällt. Weiterhin zeichnen sich die Wabendichtungen im Sinne der Erfindung durch ein geringeres Gewicht aus. Dies ist insbesondere bei Flugzeugtriebwerken vorteilhaft. Die erfindungsgemäße Wabendichtung lässt sich insgesamt günstiger herstellen. Auch ist eine höhere Fertigungstiefe und damit Wertschöpfung möglich.

Ferner ist es möglich, dass die Wabendichtungen 10, 15 und 20 aus einem anderen Material hergestellt sind wie die Tragelemente 11, 19 oder 23. So können die Tragelemente zum Beispiel aus Keramik hergestellt werden. Bei den Tragelementen 11, 19 bzw. 23 handelt es sich um Bauteile, die bei Flugzeugtriebwerken in das Gehäuse desselben eingebracht werden. Die Wabendichtungen 10, 15, 20 bzw. Segmente derselben können dann auf einfache Art und Weise in die im Gehäuse des Triebwerks befestigen Tragelemente 11, 19 bzw. 23 eingeschoben werden.

Die Wabendichtungen 10, 15 und 20 können auch einstückig mit den Tragelementen 11, 19 oder 23 in MIM-Technik, d.h. durch pulvermetallurgisches Spritzgießen, hergestellt werden, wobei dieses Integralteil dann direkt im Gehäuse angeordnet wird.

Aufgrund der geringen Kosten und der einfachen Fertigung können die Wabendichtungen 10, 15 und 20 als Einwegteile eingesetzt werden.

Die Präzision des MIM-Verfahrens zur Fertigung der Wabendichtung ist derart hoch, dass selbst feinste Strukturen, wie die Wabenelemente 13, 17, 22, die mit dem Schlitz 30 zusammenwirkende Zunge oder auch Teilenummern, ausgebildet werden können.

## Patentansprüche

1. Wabendichtung zur Abdichtung zwischen einem feststehenden Bauteil und einem bewegten Bauteil, insbesondere zur Abdichtung eines radialen Spalts zwischen einem Rotor und einem Stator einer Gasturbine, **dadurch gekennzeichnet, dass** die Wabendichtung durch pulvermetallurgisches Spritzgießen hergestellt ist.

2. Wabendichtung nach Anspruch 1, **dadurch gekennzeichnet, dass** dieselbe aus mehreren Segmenten zusammengesetzt ist, wobei die Segmente einstückig ausgebildet sind und über ein Bodenelement (12, 16, 21) sowie über Wabenelemente (13, 17, 22) verfügen, und wobei das Bodenelement (12, 16, 21) die Wabenelemente (13, 17, 22) trägt.

3. Wabendichtung nach Anspruch 2, **dadurch gekennzeichnet, dass** die Segmente der Wabendichtung (10, 15, 20) mit einem Tragelement (11, 19, 23) verbindbar sind, wobei die Segmente und das Tragelement (11, 19, 23) aus dem gleichen Werkstoff oder aus unterschiedlichen Werkstoffen bestehen.

4. Wabendichtung nach Anspruch 3, **dadurch gekennzeichnet, dass** die Bodenelemente (12, 16, 21) der Segmente mindestens einen Führungsabschnitt (14, 18, 24) aufweisen, wobei die Segmente über den oder jeden Führungsabschnitt (14, 18, 24) mit einem Tragelement (11, 19, 23) verbindbar sind, und wobei die Segmente derart miteinander verzahnt sind, das ein Segment mit einem Vorsprung (26) in eine entsprechende Ausnehmung (25) eines benachbarten Segments eingreift.

5. Wabendichtung nach einem der vorhergehenden Ansprüche, **dadurch gekennzeichnet, dass** der abzudichtende Spalt zwischen rotierenden Laufschaufeln des Rotors und einem Gehäuse als Stator oder zwischen nicht rotierenden Leitschaufeln des Stators und dem Rotor liegt.

6. Wabendichtung nach einem der Ansprüche 2 bis 5, **dadurch gekennzeichnet, dass** das Wabenelement (13, 17, 22) und das Bodenelement (12, 16, 21) aus unterschiedlichen Werkstoffen bestehen.

## Claims

1. A honeycomb seal for sealing between a fixed component and a moving component, in particular for sealing a radial gap between a rotor and a stator of a gas turbine, **characterised in that** the honeycomb seal is produced by powder-metallurgical injection-moulding.

2. A honeycomb seal according to claim 1, **characterised in that** the same is composed of a plurality of segments, with the segments being formed in one piece and being provided with a base element (12, 16, 21) and also honeycomb elements (13, 17, 22), and with the base element (12, 16, 21) supporting the honeycomb elements (13, 17, 22).

3. A honeycomb seal according to claim 2, **characterised in that** the segments of the honeycomb seal (10, 15, 20) can be connected to a supporting element (11, 19, 23), with the segments and the supporting element (11, 19, 23) consisting of the same material or of different materials.

4. A honeycomb seal according to claim 3, **characterised in that** the base elements (12, 16, 21) of the segments have at least one guiding section (14, 18, 24), with the segments being connectable to a supporting element (11, 19, 23) by way of the or each guiding section (14, 18, 24), and with the segments being interlocked with each other in such a way that a segment with a projection (26) engages into a corresponding recess (25) of an adjacent segment.

5. A honeycomb seal according to one of the preceding claims, **characterised in that** the gap that is to be sealed lies between rotating moving blades of the rotor and a housing as the stator or between non-rotating guide vanes of the stator and the rotor.

6. A honeycomb seal according to one of claims 2 to 5, **characterised in that** the honeycomb element (13, 17, 22) and the base element (12, 16, 21) consist of different materials.

## Revendications

1. Garniture d'étanchéité en nid-d'abeilles servant à l'étanchéification entre un élément fixe et un élément mobile, en particulier à l'étanchéification d'une fente radiale entre un rotor et un stator d'une turbine à gaz, **caractérisée en ce que** la garniture d'étanchéité en nid-d'abeilles est produite par moulage par injection utilisant la métallurgie des poudres.

2. Garniture d'étanchéité en nid-d'abeilles selon la revendication 1, **caractérisée en ce que** celle-ci se compose de plusieurs segments, les segments étant réalisés d'un seul tenant et disposant d'un élément de fond (12, 16, 21) ainsi que d'éléments en nid-d'abeilles (13, 17, 22), et l'élément de fond (12, 16, 21) portant les éléments en nid-d'abeilles (13, 17, 22).

3. Garniture d'étanchéité en nid-d'abeilles selon la revendication 2, **caractérisée en ce que** les segments de la garniture d'étanchéité en nid-d'abeilles (10, 15, 20) peuvent être reliés à un élément support (11, 19, 23), les segments et l'élément support (11, 19, 23) étant du même matériau ou en matériaux différents.

4. Garniture d'étanchéité en nid-d'abeilles selon la revendication 3, **caractérisée en ce que** les éléments de fond (12, 16, 21) des segments présentent au moins une section de guidage (14, 18, 24), les segments pouvant être reliés à un élément support (11, 19, 23) par le biais de la ou de chaque section de guidage (14, 18, 24), et les segments s'engrenant les uns avec les autres de telle sorte qu'un segment prend avec une saillie (26) dans un évidement correspondant (25) d'un segment voisin.

5. Garniture d'étanchéité en nid-d'abeilles selon l'une quelconque des revendications précédentes, **caractérisée en ce que** la fente à étancher se trouve entre des aubes mobiles rotatives du rotor et un carter sous forme de stator ou entre des aubes mobiles non rotatives du stator et le rotor.

6. Garniture d'étanchéité en nid-d'abeilles selon l'une quelconque des revendications 2 à 5, **caractérisée en ce que** l'élément en nid-d'abeilles (13, 17, 22) et l'élément de fond (12, 16, 21) sont en matériaux différents.
